Europäisches Patentamt

European Patent Office

Office européen des brevets

(11) Veröffentlichungsnummer: **0 248 945**
**A2**

(12) **EUROPÄISCHE PATENTANMELDUNG**

(21) Anmeldenummer: **86116611.4**

(22) Anmeldetag: **28.11.86**

(51) Int. Cl.⁴: **G11B 27/32**

(30) Priorität: **09.06.86 DE 3619359**

(43) Veröffentlichungstag der Anmeldung:
**16.12.87 Patentblatt 87/51**

(84) Benannte Vertragsstaaten:
**AT BE CH FR GB IT LI NL SE**

(71) Anmelder: **General Service Electronics GmbH**
**Kostheimer Landstrasse 36**
**D-6502 Mainz-Kostheim(DE)**

(72) Erfinder: **Roggendorf, Peter, Dipl.-Ing.**
**Friedrichstrasse 17**
**D-6500 Mainz(DE)**

(74) Vertreter: **Knoblauch, Ulrich, Dr.-Ing.**
**Kühhornshofweg 10**
**D-6000 Frankfurt am Main 1(DE)**

(54) Verfahren zum Übertragen eines Informationskodes auf der Synchronspur eines Videobandes, Vorrichtung zur Durchführung des Verfahrens sowie nach dem Verfahren hergestelltes Videoband.

(57) Bei einem Verfahren zum Übertragen eines Informationskodes auf der Synchronspur eines Videobandes erfolgt das nachträgliche Aufzeichnen durch Zusatzimpulse (Z1). Diese magnetisieren die Synchronspur zusätzlich unter zumindest teilweiser Überlappung der Synchronimpuls-Aufzeichnung und in gleichem Sinne wie diese binärwert-abhängig. Dies erfordert keine Löschung der Synchronimpuls-Aufzeichnung. Eine Aufzeichnungsvorrichtung (1) weist einen Zusatzimpulsgenerator (24) und mindestens zwei beim Auftreten von Synchronsignalen (S2) in Lauf gesetzte Zeitglieder (FF1, FF2) auf. Das eine Zeitglied betätigt einen Umschalter (13) und das zweite den Zusatzimpulsgenerator (23). Eine Lesevorrichtung (2) besitzt zwei Schwellwertdetektoren (K1, K2) zur getrennten Feststellung von Synchronsiglen (Z2), ferner mindestens ein Zeitglied, das beim Auftreten des einen Signals in Lauf gesetzt wird, und eine Kode-Auswertevorrichtung (31), die feststellt, ob das andere Signal während oder nach der Laufzeit des Zeitgliedes auftritt. Ein bespieltes Videoband trägt auf der Synchronspur doppelt magnetisierte Bereiche etwa von der Länge der Synchronimpuls-Aufzeichnung und daran anschließende einfach magnetisierte Bereiche mit einer von zwei unterschiedlichen Längen, die aber kleiner als die der Synchronimpuls-Aufzeichnung sind.

Fig. 1

## Verfahren zum Übertragen eines Informationskodes auf der Synchronspur eines Videobandes, Vorrichtung zur Durchführung des Verfahrens sowie nach dem Verfahren hergestelltes Videoband

Die Erfindung bezieht sich auf ein Verfahren zum Übertragen eines Informationskodes auf der Synchronspur eines Videobandes mit nachträglicher Aufzeichnung durch Kodierung von bereits aufgezeichneten Synchronimpulsen, auf eine Vorrichtung zur Durchführung dieses Verfahrens sowie auf ein Videoband, das nach diesem Verfahren hergestellt ist.

Bei einem bekannten Verfahren (DE-PS 33 09 029) wird ein Zeitkode derart in der Synchronspur aufgezeichnet, daß jeweils eine vorgegebene Anzahl von Synchronimpulsen zu einem, einer bestimmten Bandlänge zugeordneten Datenblock zusammengefaßt wird und daß die Synchronimpulse eines jeden Datenblocks mit einer, die jeweilige Bandlänge enthaltenden Information derart kodiert und aufgezeichnet werden, daß sich aus den kodierten Datenblöcken die Synchronimpulse bei der Wiedergabe regenerieren lassen. Beispielsweise können die Synchronimpulse durch Pulspolaritätsmodulation, durch Breitenmodulation oder durch eine Frequenzmodulation kodiert werden. Hierbei wird eine eventuell bereits auf der Synchronspur vorhandene Impulsaufzeichnung durch die Aufzeichnung eines kodierten Impulses ersetzt. Das bedeutet, daß bei einer nachträglichen Aufzeichnung des Kodes bereits aufgezeichnete Synchronimpulse gelöscht werden müssen. Eine derartige Löschung nur auf der Synchronspur erfordert einen erheblichen Aufwand und birgt die Gefahr einer Beeinträchtigung eines bereits aufgezeichneten Videobildes in sich.

Der Erfindung liegt die Aufgabe zugrunde, ein Verfahren der eingangs beschriebenen Art anzugeben, bei dessen Verwendung bereits bespielte Videobänder nachträglich kodiert werden können, ohne daß eine Löschung erforderlich ist.

Diese Aufgabe wird erfindungsgemäß dadurch gelöst, daß die Kodierung in an sich bekannter Weise durch Breitenmodulation erfolgt, daß die magnetische Aufzeichnung der kodierten Impulse eine größere Länge hat als diejenige der Synchronimpulse und daß das nachträgliche Aufzeichnen durch Zusatzimpulse erfolgt, welche die Synchronspur unter zumindest teilweiser Überlappung der Synchronimpuls-Aufzeichnung und in gleichem Sinne wie diese binärwertabhängig zusätzlich magnetisieren.

Durch die Zusatzimpulse wird die Synchronimpuls-Aufzeichnung entsprechend der Binärwertigkeit verlängert. Die Überlappung ist vorteilhaft, um eine durchgehende Aufzeichnung des kodierten Impulses zu erhalten. Daß hierbei der Bereich der Synchronimpuls-Aufzeichnung ein zweites Mal magnetisiert wird, ist für das spätere Lesen unschädlich, weil bereits die erste magnetische Aufzeichnung sich im Bereich der Sättigung oder in der Nähe dieses Bereichs befindet, so daß durch die zweite Magnetisierung keine wesentliche Änderung erfolgt. Da keine Löschung erforderlich ist, läßt sich dieses Verfahren sehr einfach durchführen. Es besteht auch keine Gefahr der Beeinträchtigung bereits aufgezeichneter Videobilder. Ein weiterer Vorteil liegt darin, daß die nachträglich kodierten Videobänder auch auf herkömmlichen Videorecordern abgespielt werden können (allerdings ohne Auswertung der kodierten Information), weil eines der Enden, vorzugsweise das vordere Ende, der Synchronimpuls-Aufzeichnung weiterhin zur Gewinnung eines Synchronsignals ausgenutzt werden kann.

Im einzelnen empfiehlt es sich, daß der Beginn der magnetischen Synchronimpuls-Aufzeichnung detektiert wird und daß der Zusatzimuls in Abhängigkeit vom Detektierungszeitpunkt ausgelöst und nach einer ersten oder zweiten, von seinem Binärwert abhängigen Verzögerungszeit beendet wird. Die beiden Verzögerungszeiten können sich in ausreichender Weise unterscheiden. Bei normaler Bandgeschwindigkeit beginnt jeweils nach 40 ms eine neue SynchronimpulsAufzeichnung, die eine Dauer von etwa 20 ms hat. Dann genügt es, die Aufzeichnungen um 10 ms bzw. 15 ms zu verlängern, um eindeutige Aussagen über den Binärwert machen zu können.

Beim Auslesen ist es vorteilhaft, daß aus dem am Beginn der magnetischen Aufzeichnung des kodierten Impulses am Magnetkopf auftretenden Anfangssignal ein Synchronsignal und aus dem am Ende der Aufzeichnung auftretenden Endsignal entgegengesetzter Polarität ein Kodesignal gewonnen und aus der Zeitdifferenz zwischen Synchron-und Kodesignal der Binärwert bestimmt wird. Die Auswertung unterschiedlicher Polaritäten ist auf einfache Weise möglich. Durch das Zusammenwirken von Synchronsignalen und Kodesignalen kann man sehr leicht den Binärwert bestimmen.

Günstig ist es hierbei, wenn jeweils die Zeitdifferenz zwischen dem Kodesignal und dem nachfolgenden Synchronsignal ausgewertet wird. Diese Zeitdifferenz ist kürzer als diejenige zwischen dem vorangehenden Synchronsignal und dem Kodesignal. Sie läßt sich daher einfacher und genauer auswerten.

Ferner ist es von Vorteil, daß das Kodesignal zwei Zeitfenster festlegt und festgestellt wird, in welches Zeitfenster das nachfolgende Synchronsignal fällt. Die Zeitfenster, also nach beiden Richtungen begrenzte Zeiträume, haben den Vorteil, daß außerhalb der Fenster auftretende Impulse unbeachtet bleiben.

Eine Vorrichtung zur Durchführung des Verfahrens mit einem Schreib-Lese-Magnetkopf und einem Schreib-Lese-Umschalter ist erfindungsgemäß gekennzeichnet durch einen Schwellwertdetektor zur Feststellung des Beginns der Synchronimpuls-Aufzeichnung und zur Abgabe eines Synchronsignals, durch einen Zusatzimpulsgenerator, der beim Auftreten des Synchronsignals einen Zusatzimpuls abgibt, und durch mindestens zwei beim Auftreten des Synchronsignals in Lauf gesetzte Zeitglieder, von denen das erste den Umschalter zeitweilig von Lese-auf Schreibbetrieb schaltet und von denen das zweite den Zusatzimpuls nach Ablauf einer von zwei Verzögerungszeiten beendet.

Eine solche Vorrichtung dient der Aufzeichnung der kodierten Impulse. Die Synchronimpuls-Aufzeichnung wird zwar zur Gewinnung eines der Ansteuerung der Zeitglieder dienenden Synchronsignals benutzt, bleibt aber auf der Synchronspur erhalten. Beim nachträglichen Aufzeichnen des Informationskodes ist die fortwährende Betätigung des Umschalters erforderlich, damit zunächst die Ablesung der Synchronimpuls-Aufzeichnung und dann die zusätzliche Magnetisierung mit Hilfe des Zusatzimpulses erfolgen kann.

Bei einer bevorzugten Ausführungsform ist dafür gesorgt, daß der Zusatzimpulsgenerator einen elektronischen Schalter aufweist, um den Magnetkopf an Spannung zu legen, und daß das zweite Zeitglied den Schalter beim Auftreten des Synchronsignals schließt und am Ende der Verzögerungszeit öffnet. So läßt sich auf einfache Weise der Zusatzimpuls auf den Magnetkopf leiten.

Günstig ist auch ein zweiter Schalter, der die Zuleitung zum Magnetkopf gegenläufig zum ersten Schalter an Masse legt. Auf diese Weise ergibt sich eine scharfe Begrenzung der Aufzeichnung des kodierten Impulses.

Der Schreib-Lese-Umschalter ist vorzugsweise ein elektronischer Umschalter, der mittels einer vom ersten Zeitglied ausgehenden Steuerspannung umschaltbar ist. Ein solcher elektronischer Umschalter ist zweckmäßigerweise in die Baueinheit eingesetzt, die den Schreib-Lese-Magnetkopf, einen Verstärker und einen Schwellwertdetektor zur Abgabe der Synchronsignale aufweist. Aufgrund der elektronischen Ansteuerung vermag er die erforderlichen raschen Umschaltungen durchzuführen.

Des weiteren ist eine Vorrichtung zur Durchführung des beschriebenen Verfahrens mit einem Lese-Magnetkopf und einer Signal-Auswertevorrichtung erfindungsgemäß gekennzeichnet durch zwei Schwellwertdetektoren zur getrennten Feststellung des Beginns und des Endes der Aufzeichnung der kodierten Impulse und zur Abgabe von Synchronsignalen und Kodesignalen, durch mindestens ein Zeitglied, das beim Auftreten des einen Signals in Lauf gesetzt wird, und durch eine Kode-Auswertevorrichtung, die feststellt, ob das andere Signal während oder nach der Laufzeit des Zeitgliedes auftritt.

Diese Vorrichtung dient zum Lesen der Aufzeichnung der kodierten Impulse. Die an sich der Synchronsteuerung dienenden Synchronsignale werden hier zur Ansteuerung des Zeitgliedes genutzt. Durch die Kombination des zeitlichen Auftretens von Synchronsignal und Kodesignal läßt sich der jeweilige Binärwert ermitteln.

Besonders zweckmäßig sind zwei Zeitglieder mit unterschiedlicher Laufzeit, die beim Auftreten des einen Signals in Lauf gesetzt werden, wobei die Kode-Auswertevorrichtung feststellt, ob das andere Signal während der Laufzeit eines oder beider Zeitglieder auftritt. Auf diese Weise ergeben sich zwei aneinander grenzende Zeitfenster, von denen das eine durch die Laufzeit und das andere durch die Differenz der beiden Laufzeiten gebildet ist.

Im einzelnen empfiehlt es sich, daß die beiden Zeitglieder durch je ein Monoflop gebildet sind und daß die KodeAuswertevorrichtung zwei JK-Flipflops, die jeweils durch das Ausgangssignal eines Monoflops vorbereitet und durch das Ausgangssignal des Schwellwertdetektors für das andere Signal gesetzt werden, sowie einen die Flipflop-Ausgänge abfragenden Logikkreis aufweist. Derartige Monoflops und Flipflops lassen sich sehr einfach in integrierter Form herstellen. Als Logikkreis kann beispielsweise ein Mikroprozessor dienen.

Insbesondere kann die Laufzeit des der Kode-Auswertevorrichtung zugeordneten mindestens einen Zeitgliedes auf einen kleineren Wert umsteuerbar sein. Auf diese Weise ist ein Schnellauf des Bandes möglich, um die Information schneller lesen zu können bzw. kontrolliert eine bestimmte Stelle des Videobandes schneller erreichen zu können. Des weiteren ist es günstig, daß das mindestens eine Zeitglied vom Kodesignal in Lauf gesetzt wird und die Kode-Auswertevorrichtung das Auftreten des Synchronsignales überwacht. Auch hier wird von dem Vorteil Gebrauch gemacht, daß kleinere Zeitdifferenzen besser überwacht werden können als größere.

Eine weitere Vereinfachung ergibt sich dadurch, daß ein gemeinsamer Schwellwertdetektor ein Synchronsignal sowohl an das den Zusatzimpulsgenerator steuernde Zeitglied als auch an das mindestens eine der Kode-Auswertevorrichtung zugeordnete Zeitglied abgibt. Wenn eine Aufzeichnungsvorrichtung mit einer Lesevorrichtung kombiniert ist, kann man durch die Verwendung eines gemeinsamen Schwellwertdetektors Kosten sparen.

Geschützt ist auch ein bespieltes Videoband, das nach dem beschriebenen Übertragungsverfahren hergestellt und dadurch gekennzeichnet ist, daß auf der Synchronspur zur Aufzeichnung von kodierten Impulsen doppelt magnetisierte Bereiche etwa von der Länge der Synchronimpuls-Aufzeichnung und daran anschließende einfach magnetisierte Bereiche mit einer von zwei unterschiedlichen Längen, die aber kleiner als die der Synchronimpuls-Aufzeichnung sind, aufweist. Ein solches Videoband kann herkömmlich aufgenommen und nachträglich mit einer Kodierung versehen sein. Es läßt sich trotz der Kodierung auf einem herkömmlichen Videorecorder abspielen.

Empfehlenswert ist es auch, daß die durch die Aufzeichnungslänge der kodierten Impulse gekennzeichneten Binärwerte bei einer vorgegebenen Anzahl von Impulsen einen Informationskode-Datenblock bilden. Bei Auswertung der Aufzeichnung der kodierten Impulse ergibt sich demnach ein Informationskode, der die verschiedensten Hinweise, insbesondere solche über momentane Bandlänge und die Bandbewegungsrichtung, enthalten kann.

Die Erfindung wird nachstehend anhand eines in der Zeichnung dargestellten, bevorzugten Ausführungsbeispiels näher erläutert. Es zeigen:

Fig. 1 eine schematisch dargestellte Schaltung einer kombinierten Aufzeichnungs-und Lesevorrichtung gemäß der Erfindung für einen Videorecorder,

Fig. 2 in Zeitdiagrammen die an Testpunkten der Aufzeichnungsvorrichtung auftretenden Spannungen über der Synchronspur eines Videobandes,

Fig. 3 die an Testpunkten der Lesevorrichtung auftretenden Spannungen unter der Synchronspur eines Videobandes,

Fig. 4 schematisch ein bespieltes Videoband und

Fig. 5 schematisch ein Beispiel eines Informationskode-Datenblocks.

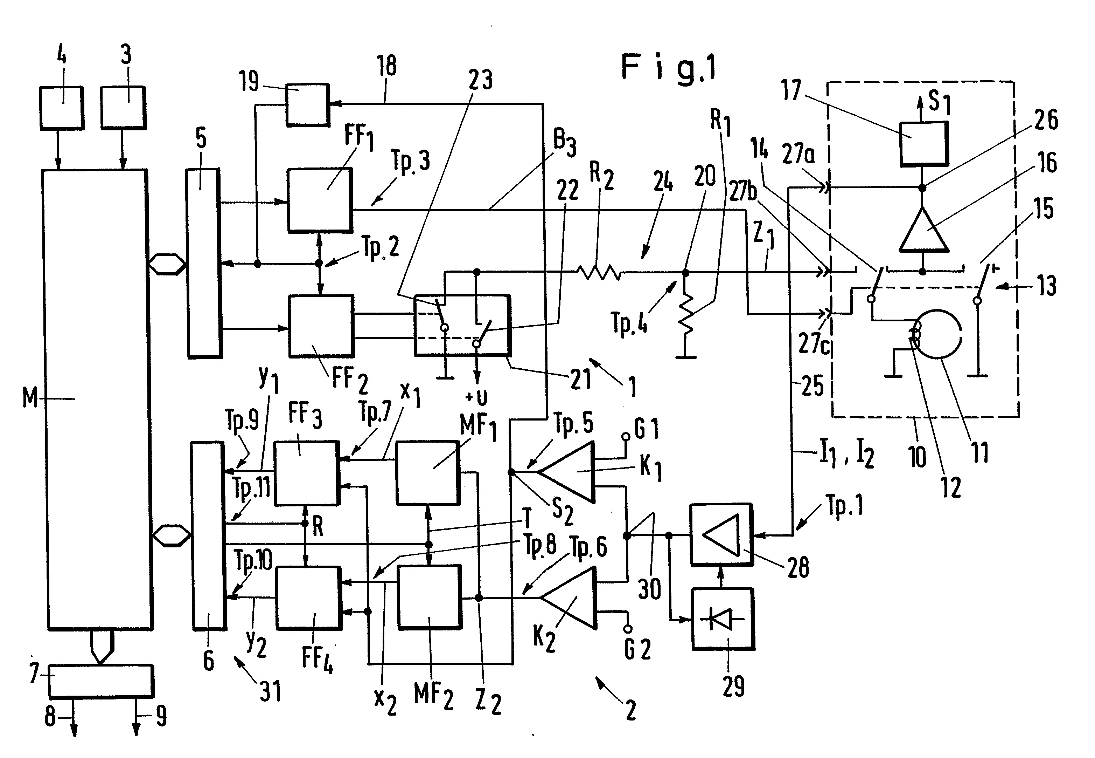

Fig. 1 zeigt in Kombination eine Aufzeichnungsvorrichtung 1 und eine Lesevorrichtung 2, die beide von einem Mikroprozessor M gesteuert werden. Der Mikroprozessor weist in üblicher Weise einen Rechner (CPU), einen Taktimpulsgenerator, einen Festwertspeicher, einen Variablenspeicher, einen Datenbus, einen Adressbus und einen Kontrollbus auf. Er besitzt eine Eingabevorrichtung 3, beispielsweise eine Tastatur, und eine Anzeigevorrichtung 4, beispielsweise ein Display. Er steht über eine Schnittstelle 5 mit der Aufzeichnungsvorrichtung 1, über eine Schnittstelle 6 mit der Lesevorrichtung 2 und über eine Schnittstelle 7 mit einem zu einem Video-Wiedergabegerät führenden Steuerkanal 8 und einem zu einem Video-Aufnahmegerät führenden Steuerkanal 9 in Verbindung. Die Steuerkanäle können durch elektrische Verbindungen, durch Infrarotstrecken o.dgl. gebildet sein.

Eine Baueinheit 10, beispielsweise innerhalb eines Videorecorders, umfaßt einen der Videoband-Synchronspur zugeordneten Schreib-Lese-Magnetkopf 11 mit zugehöriger Spule 12, einen elektronischen Umschalter 13 mit zwei Schaltstrecken 14 und 15, einen Verstärker 16 und einen Schwellwertdetektor 17, der beim Überschreiten eines vorgegebenen positiven Schwellwerts anspricht, also dann, wenn zu Beginn einer magnetischen Aufzeichnung in der Spule 12 ein positives Anfangssignal induziert wird, und dann ein Synchronsignal S1 zur Steuerung des Bandantriebs des Videorecorders abgibt.

Auf ähnliche Weise wird - wie noch später erläutert -ein zweites Synchronsignal S2 gewonnen und über eine Leitung 18 mit einer Störaustastlogik 19 den Eingängen zweier Zeitglieder, nämlich der Flipflops FF1 und FF2, sowie der Schnittstelle 5 zugeführt. Beiden Flipflops ist die Verzögerungszeit durch den Mikroprozessor M vorgegeben. Das Flipflop FF1 steuert den Umschalter 13. Bei Erregung geht der Umschalter aus der veranschaulichten Stellung für den Lesebetrieb, in der die Spule 12 mit dem Verstärker 16 verbunden ist, in die andere Stellung für den Schreibbetrieb, in der der Verstärker 16 an Masse gelegt und die Spule 12 mit dem Abgriff 20 eines Spannungsteilers verbunden ist, der aus den Widerständen R1 und R2 besteht. Dieser Spannungsteiler bildet zusammen mit einer Schaltvorrichtung 21, welche zwei Schalter 22 und 23 aufweist, einen Generator 24 für Zusatzimpulse Z1, die am Abgriff 20 zur Aufzeichnung durch den Magnetkopf 11 abnehmbar sind.

Die Lesevorrichtung 2 steht über eine Leitung 25 mit dem Ausgang 26 des Verstärkers 16 in Verbindung. Zum Anschluß der kombinierten Aufzeichnungs-und Lesevorrichtung 1, 2 sind daher lediglich drei Verbindungen 27a, 27b und 27c zur Baueinheit 10 im Videorecorder herzustellen. Diese Leitung 25 führt die in der Spule 12 zu Beginn und am Ende jeder magnetischen Aufzeichnung induzierten Anfangssignale I1 und Endsignale I2. Diese werden in einem Verstärker 28, der mittels eines Reglers 29 geregelt wird, verstärkt und dann den Eingängen zweier Schwellwertdetektoren K1 und K2 zugeführt. Deren andere Eingänge werden je mit einem Grenzwert G1 bzw. G2 versorgt. Wenn das Signal am Verstärkerausgang 30 den Grenzwert G1 überschreitet, also das Anfangssignal I1 auftritt, wird ein Synchronsignal S2 erzeugt, das einerseits über die Leitung 18 zur Aufzeichnungsvorrichtung 1 und andererseits an die Setzeingänge zweier JK-Flipflops FF3 und FF4 geleitet wird. Wenn das Signal am Verstärkerausgang 30 den Grenzwert G2 unterschreitet, also beim Auftreten des Endsignals I2, gibt der Schwellwertdetektor K2 ein Kodesignal Z2 ab, das den Eingängen zweier Monoflops MF1 und MF2 zugeführt wird. Die beiden Monoflops haben eine unterschiedliche Laufzeit und geben während dieser Laufzeit Vorbereitungsimpulse X1 bzw. X2 an die Vorbereitungseingänge der JK-Flipflops FF3 bzw. FF4 ab. An deren Ausgängen treten dann entsprechende Signale Y1 bzw. Y2 auf, die vom Mikroprozessor M ausgewertet werden. Der Mikroprozessor gibt auch ein entsprechendes Rückstellsignal R an die beiden Flipflops FF3 und FF4 bzw. ein Schnellaufsignal T zur Verkürzung der Laufzeit der beiden Monoflops MF1 und MF2 ab. Die Flipflops und der Mikroprozessor bilden zusammen eine Kode-Auswerteschaltung 31.

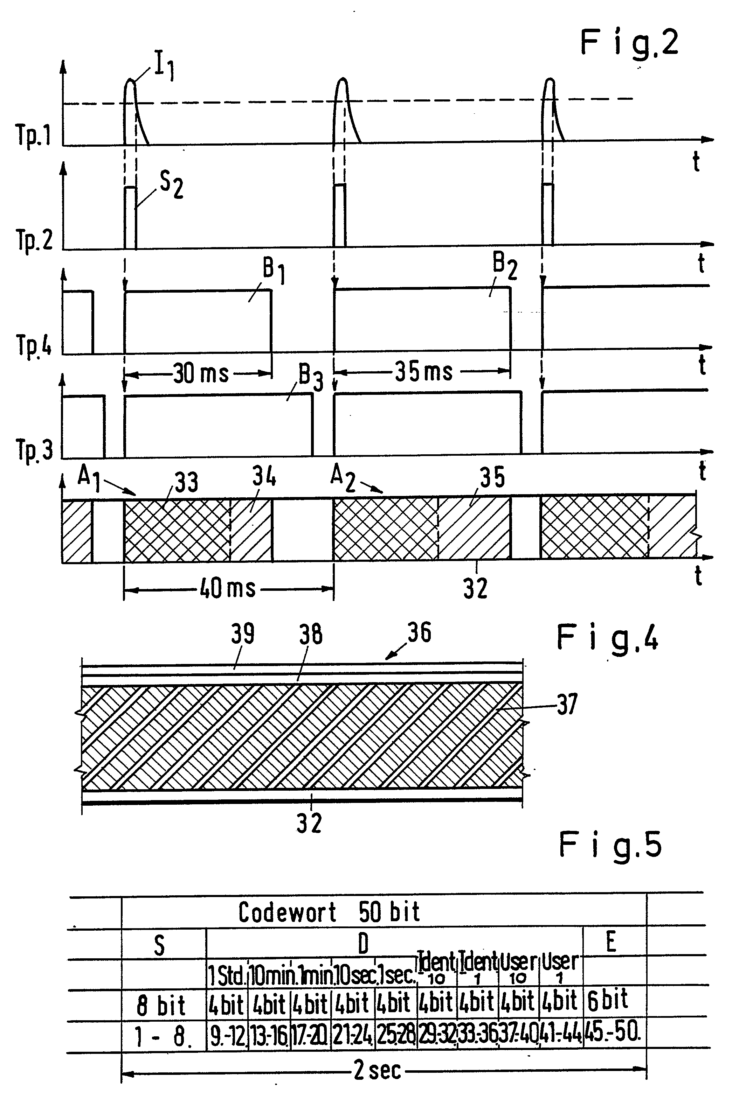

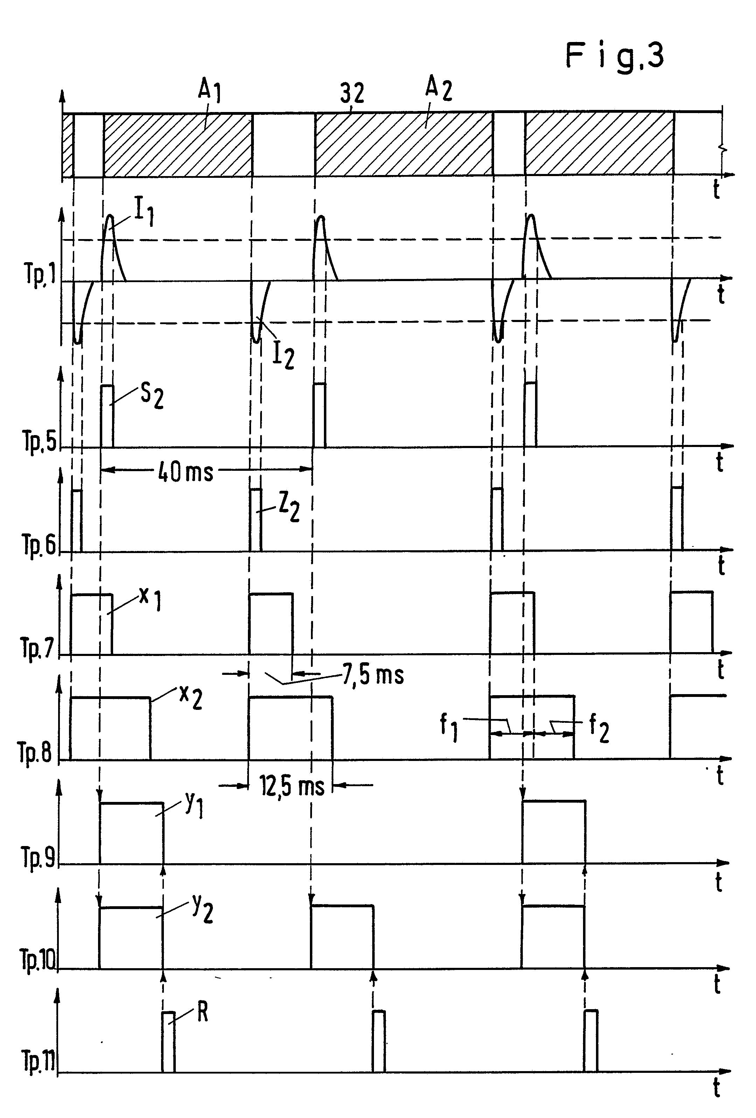

In Fig. 2 ist die Arbeitsweise der Vorrichtung zum nachträglichen Aufzeichnen eines Informationskodes näher erläutert. Am Testpunkt Tp1 treten die induzierten Anfangssignale I1 auf. Aus ihnen werden im Schwellwertdetektor K1 die Synchronsignale S2 gewonnen. Bei normaler Bandgeschwindigkeit folgen sie in einem Abstand von 40 ms. Mit der Vorderflanke dieses Synchronsignals werden die beiden Flipflops FF1 und FF2 ausgelöst. Das zweite Flipflop FF2 wird vom Mikroprozessor M so gesteuert, daß es den Spannungsteiler R1, R2 je nach dem gewünschten Binärwert im Informationskode für eine kürzere oder längere Zeit, hier 30 ms oder 35 ms, an die Spannung +U legt. Dies ergibt die Spannungsblöcke B1 bzw. B2 am Testpunkt Tp4. Das Flipflop FF1 erzeugt Spannungsblöcke B3, mit deren Hilfe der Umschalter 13 in die Stellung "Schreibbetrieb" gesteuert wird. Diese Umschaltung erfolgt, sobald das induzierte Anfangssignal I1 abgelesen worden ist. Der Schreibbetrieb bleibt über eine etwas längere Zeit als die Dauer des Spannungsblocks B2 erhalten, so daß die Spule 12 auf jeden Fall über den Schalter 23 an Masse gelegt werden kann.

Hieraus resultieren die Aufzeichnungen A1 und A2, die in der in Fig. 2 unten veranschaulichten Synchronspur 32 zu finden sind. Im Bereich der ursprünglichen Synchronimpulsaufzeichnung 33 ergibt sich eine doppelte Magnetisierung. Hieran - schließt sich ein kürzerer Bereich 34 oder ein längerer Bereich 35 mit einfacher Magnetisierung an. In allen Bereichen 33 bis 35 ist eine Magnetisierung bis an die Sättigung oder deren Nähe erfolgt. Die Gesamtaufzeichnungen A1 und A2 haben unterschiedliche Länge und kennzeichnen die kodierten Impulse B1 und B2.

Beim Lesen dieser Aufzeichnungen A1 und A2, die nochmals in der obersten Zeile der Fig. 3 dargestellt sind, treten am Testpunkt Tp1 sowohl die induzierten Anfangssignale I1 als auch die induzierten Endsignale I2 auf, weil der Umschalter 13 nicht in Abhängigkeit von den Anfangssignalen I1 betätigt wird. Hieraus werden im Schwellwertdetektor K1 die Synchronsignale S2 (Testpunkt Tp5) und im Schwellwertdetektor K2 die Kodesignale Z2 (Testpunkt Tp6) gewonnen. Die von den Kodesignalen Z2 angestoßenen Monoflops MF1 und MF2 erzeugen die Ausgangssignale X1 und X2, die beispielsweise für eine Zeitdauer von 7,5 ms bzw. 12,5 ms geöffnet sind (Testpunkte Tp7 und Tp8). Hierdurch sind die JK-Flipflops FF3 und FF4 vorbereitet, so daß sie beim Auftreten des Synchronsignals S2 ein Ausgangssignal Y1 bzw. Y2 abgeben (Testpunkte Tp9 und Tp10). Sie enden beim Auftreten des Rückstellsignals R (Testpunkt Tp11).

Wenn das Synchronsignal S2 einen kleinen Abstand vom Kodesignal Z2 hat, treten beide Ausgangssignale Y1 und Y2 auf. Hat dagegen das Synchronsignal S2 einen größeren Abstand vom Kodesignal Z2, ergibt sich lediglich das Ausgangssignal Y2. Hieran kann der Mikroprozessor den Binärwert der jeweiligen Impulskombination erkennen.

Es ergeben sich zwei Fenster f1 und f2, welche den Binärwert bestimmen. Sollte der Schwellwertdetektor K2 einen negativen Impuls außerhalb der Fenster feststellen, so wird dieser nicht erfaßt.

Fig. 4 zeigt ein Videoband 36, das in üblicher Weise Schrägspuren 37, die Synchronspur 32 und Audiospuren 38, 39 aufweisen.

Die Synchronspur 32 kann beispielsweise einen Informationskode enthalten, wie er in Fig. 5 schematisch veranschaulicht ist.

Jedem Vollbild (oder Halbbild) ist eine Aufzeichnung A1 oder A2 zugeordnet, die zur Gewinnung eines Synchronsignals geeignet ist und außerdem einen Binärwert hat. Ein Informationskode besteht aus 50 Bit, was bei Vollbildern einer Zeitdauer von 2 sek entspricht. Der Datenblock umfaßt einen Startbereich S mit 8 Bit und einen Endbereich E mit 6 Bit, durch welche die Laufrichtung des Bandes erkennbar ist. Dazwischen befindet sich ein Datenbereich D, der Stunden-Einer, Minuten-Zehner, Minuten-Einer, Sekunden-Zehner, Sekunden-Einer, einen zweistelligen Identifizierungskode und einen zweistelligen Benutzerkode enthält. Durch Änderung des Identifizierungskodes kann den vorangehenden Daten eine andere Bedeutung gegeben werden. Der Benutzerkode gibt beispielsweise Hinweise auf die Kassettennummer, die Kopieranstalt o.dgl. Der veranschaulichte Datenblock gibt durch die Zeitangaben die Möglichkeit, eine Stelle des Videobandes genau zu bezeichnen und auch rasch anzusteuern. Der Datenblock kann aber auch andere Informationen enthalten, beispielsweise ein dem Zeitkode vorgeschaltetes Inhaltsverzeichnis (directory) oder auch Steuerbefehle, Schlüsseldaten u.dgl.

## Ansprüche

1. Verfahren zum Übertragen eines Informationskodes auf der Synchronspur eines Videobandes mit nachträglicher Aufzeichnung durch Kodierung von bereits aufgezeichneten Synchronimpulsen, dadurch gekennzeichnet, daß die Kodierung in an sich bekannter Weise durch Breitenmodulation erfolgt, daß die magnetische Aufzeichnung (A1, A2) der kodierten Impulse eine größere Länge hat als diejenige der Synchronimpulse und daß das nachträgliche Aufzeichnen durch Zusatzimpulse (Z1) erfolgt, welche die Synchronspur unter zumindest teilweiser Überlappung der Synchronimpuls-Aufzeichnung (33) und in gleichem Sinne wie diese binärwertabhängig zusätzlich magnetisieren.

2. Verfahren nach Anspruch 1, dadurch gekennzeichnet, daß der Beginn der magnetischen Synchronimpuls-Aufzeichnung (33) detektiert wird und daß der Zusatzimpuls (Z1) in Abhängigkeit vom Detektierungszeitpunkt ausgelöst und nach einer ersten oder zweiten, von seinem Binärwert abhängigen Verzögerungszeit beendet wird.

3. Verfahren nach Anspruch 1 oder 2, dadurch gekennzeichnet, daß beim Auslesen aus dem am Beginn der magnetischen Aufzeichnung (A1, A2) des kodierten Impulses am Magnetkopf (11) auftretenden Anfangssignal (I1) ein Synchronsignal (S2) und aus dem an Ende der Aufzeichnung auftretenden Endsignal (I2) entgegengesetzter Polarität ein Kodesignal (Z2) gewonnen und aus der Zeitdifferenz zwischen Synchron-und Kodesignal der Binärwert bestimmt wird.

4. Verfahren nach Anspruch 3, dadurch gekennzeichnet, daß jeweils die Zeitdifferenz zwischen dem Kodesignal (Z2) und dem nachfolgenden Snychronsignal (S2) ausgewertet wird.

5. Verfahren nach Anspruch 4, dadurch gekennzeichnet, daß das Kodesignal (Z2) zwei Zeitfenster festlegt und festgestellt wird, in welches Zeitfenster das nachfolgende Synchronsignal (S2) fällt.

6. Vorrichtung zur Durchführung des Verfahrens nach einem der Ansprüche 1 bis 5, mit einem Schreib-Lese-Magnetkopf und einem Schreib-Lese-Umschalter, gekennzeichnet durch einen Schwellwertdetektor (K1) zur Feststellung des Beginns der Synchronimpuls-Aufzeichnung (33) und zur Abgabe eines Synchronsignals (S2), durch einen Zusatzimpulsgenerator (24), der beim Auftreten des Synchronsignals einen Zusatzimpuls (Z1) abgibt, und durch mindestens zwei beim Auftreten des Synchronsignals (S2) in Lauf gesetzte Zeitglieder (FF1, FF2), von denen das erste den Umschalter (13) zeitweilig von Lese-auf Schreibbetrieb schaltet und von denen das zweite den Zusatzimpuls nach Ablauf einer von zwei Verzögerungszeiten beendet.

7. Vorrichtung nach Anspruch 6, dadurch gekennzeichnet, daß der Zusatzimpulsgenerator (24) einen elektronischen Schalter (22) aufweist, um den Magnetkopf (11) an Spannung zu legen, und daß das zweite Zeitglied -(FF2) den Schalter beim Auftreten des Synchronsignals (S2) schließt und am Ende der Verzögerungszeit öffnet.

8. Vorrichtung nach Anspruch 7, gekennzeichnet durch einen zweiten Schalter (23), der die Zuleitung zum Magnetkopf (11) gegenläufig zum ersten Schalter (22) an Masse legt.

9. Vorrichtung nach einem der Ansprüche 6 bis 8, dadurch gekennzeichnet, daß der Schreib-Lese-Umschalter (13) ein elektronischer Umschalter ist, der mittels einer vom ersten Zeitglied (FF1) ausgehenden Steuerspannung (B3) umschaltbar ist.

10. Vorrichtung zur Durchführung des Verfahrens nach einem der Ansprüche 1 bis 5, mit einem Lese-Magnetkopf und einer Signal-Auswertevorrichtung, gekennzeichnet durch zwei Schwellwertdetektoren (K1, K2) zur getrennten Feststellung des Beginns und des Endes der Aufzeichnung (A1, A2) der kodierten Impulse und zur Abgabe von Synchronsignalen (S2) und Kodesignalen (Z2), durch mindestens ein Zeitglied (MF1, MF2), das beim Auftreten des einen Signals in Lauf gesetzt wird, und durch eine Kode-Auswertevorrichtung (31), die feststellt, ob das andere Signal während oder nach der Laufzeit des Zeitgliedes auftritt.

11. Vorrichtung nach Anspruch 10, gekennzeichnet durch zwei Zeitglieder (MF1, MF2) mit unterschiedlicher Laufzeit, die beim Auftreten des einen Signals (Z2) in Lauf gesetzt werden, wobei die Kode-Auswertevorrichtung (31) feststellt, ob das andere Signal (S2) während der Laufzeit eines oder beider Zeitglieder auftritt.

12. Vorrichtung nach Anspruch 11, gekennzeichnet dadurch, daß die beiden Zeitglieder (MF1, MF2) durch je ein Monoflop gebildet sind und daß die Kode-Auswertevorrichtung (31) zwei JK-Flipflops (FF3, FF4), die jeweils durch das Ausgangssignal eines Monoflops vorbereitet und durch das Ausgangssignal des Schwellwertdetektors (K1) für das andere Signal gesetzt werden, sowie einen die Flipflop-Ausgänge abfragenden Logikkreis (M) aufweist.

13. Vorrichtung nach Anspruch 12, dadurch gekennzeichnet, daß die Laufzeit des der Kode-Auswertevorrichtung (31) zugeordneten mindestens einen Zeitgliedes (FF3, FF4) auf einen kleineren Wert umsteuerbar ist.

14. Vorrichtung nach einem der Ansprüche 10 bis 13, dadurch gekennzeichnet, daß das mindestens eine Zeitglied (MF1, MF2) vom Kodesignal (Z2) in Lauf gesetzt wird und die Kode-Auswertevorrichtung (31) das Auftreten des Synchronsignals (S2) überwacht.

15. Vorrichtung nach einem der Ansprüche 6 bis 14, dadurch gekennzeichnet, daß ein gemeinsamer Schwellwertdetektor (K1) ein Synchronsignal (S2) sowohl an das den Zusatzimpulsgenerator (24) steuernde Zeitglied (FF2) als auch an das mindestens eine der Kode-Auswertevorrichtung (31) zugeordnete Zeitglied (FF3, FF4) abgibt.

16. Bespieltes Videoband, das nach dem Verfahren der Ansprüche 1 oder 2 hergestellt ist, dadurch gekennzeichnet, daß auf der Synchronspur zur Aufzeichnung von kodierten Impulsen doppelt magnetisierte Bereiche (33) etwa von der Länge der Synchronimpuls-Aufzeichnung und daran anschließende einfach magnetisierte Bereiche (34, 35) mit einer von zwei unterschiedlichen Längen, die aber kleiner als die der Synchronimpuls-Aufzeichnung sind, aufweist.

17. Bespieltes Videoband nach Anspruch 16, dadurch gekennzeichnet, daß die durch die Aufzeichnungslänge der kodierten Impulse gekennzeichneten Binärwerte bei einer vorgegebenen Anzahl von Impulsen einen Informationskode-Datenblock bilden.

Fig.1

Fig.2

Fig.4

Fig.5

| Codewort 50 bit | | | | | | | | | | |
|---|---|---|---|---|---|---|---|---|---|---|
| S | D | | | | | | | | | E |
| | 1 Std. | 10 min. | 1 min. | 10 sec. | 1 sec. | Ident. 10 | Ident. 1 | User 10 | User 1 | |
| 8 bit | 4 bit | 4 bit | 4 bit | 4 bit | 4 bit | 4 bit | 4 bit | 4 bit | 4 bit | 6 bit |
| 1 - 8. | 9.-12 | 13-16 | 17-20 | 21-24 | 25.28 | 29-32 | 33.36 | 37.40 | 41.-44 | 45.-50. |
| 2 sec | | | | | | | | | | |

Fig.3